# EUROPEAN PATENT SPECIFICATION

(11) **EP 4 370 605 B1**
(45) Date of publication and mention of the grant of the patent: **06.08.2025**
(21) Application number: 22738462.5
(22) Date of filing: 28.06.2022
(51) Int. Cl.: C08L 81/06, C09K 19/38, C08G 75/23, C08G 65/40, C08L 71/00, C09K 19/52

(54) **THERMOPLASTIC MOLDING COMPOSITION WITH HIGH TEMPERATURE RESISTANCE COMPRISING A THERMOTROPIC POLYMER**
THERMOPLASTISCHE FORMMASSE MIT HOHER TEMPERATURBESTÄNDIGKEIT MIT EINEM THERMOTROPEN POLYMER
COMPOSITION DE MOULAGE THERMOPLASTIQUE À HAUTE RÉSISTANCE THERMIQUE COMPRENANT UN POLYMÈRE THERMOTROPIQUE

(30) Priority: 16.07.2021 EP 21186070
(43) Date of publication of application: 22.05.2024
(73) Proprietor: BASF SE, 67056 Ludwigshafen am Rhein (DE)
(72) Inventor: WEBER, Martin, 67056 Ludwigshafen (DE); STRAUCH, Joachim, 67056 Ludwigshafen (DE); MALETZKO, Christian, 67122 Altrip (DE)
(74) Representative: BASF IP Association
(86) International application number: PCT/EP2022/067784
(87) International publication number: WO 2023/285137

(56) References cited:
- US-A1- 2004 242 807
- US-A1- 2021 070 996
- US-B2- 7 098 266

## Description

The present invention relates to a thermoplastic molding composition comprising as components at least one non-sulfonated polyarylene ether sulfone polymer (P), at least one sulfonated polyarylene ether sulfone polymer (sP) and at least one fibrous and/or particulate filler and at least one thermotropic polymer. The present invention furthermore relates to a process for the manufacturing of a molded article using the thermoplastic molding composition and a molded article obtained by this process.

Polyarylene ether sulfone polymers are high-performance thermoplastics in that they feature high heat resistance, good mechanical properties and inherent flame retardancy (E.M. Koch, H.-M. Walter, Kunststoffe 80 (1990) 1146*;* E. Döring, Kunststoffe 80, (1990) 1149*,* N. Inchaurondo-Nehm, Kunststoffe 98, (2008) 190).

Polyarylene ether sulfone polymers can be formed *inter alia* either via the hydroxide method, wherein a salt is first formed from the dihydroxy component and the hydroxide, or via the carbonate method.

General information regarding the formation of polyarylene ether sulfone polymers by the hydroxide method is found *inter alia* in R.N. Johnson et. al., J. Polym. Sci. A-1 5 (1967) 2375, while the carbonate method is described in J.E. McGrath et. al., Polymer 25 (1984) 1827.

Methods of forming polyarylene ether sulfone polymers from aromatic bishalogen compounds and aromatic bisphenols or salts thereof in an aprotic solvent in the presence of one or more alkali metal or ammonium carbonates or bicarbonates are known to a person skilled in the art and are described in EP-A 297 363 and EP-A 135 130, for example.

High-performance thermoplastics such as polyarylene ether sulfone polymers are formed by polycondensation reactions which are typically carried out at a high reaction temperature in polar aprotic solvents, for example DMF (dimethylformamide), DMAc (dimethylacetamide), sulfolane, DMSO (dimethylsulfoxide) and NMP (N-methylpyrrolidone).

For challenging applications polyarylene ether sulfone polymers are reinforced with fibrous or particulate fillers, particularly glass fibers. This usually leads to a significant increase in stiffness and strength, but due to the weak interaction of the fibrous or particulate fillers and the polymer matrix the toughness of such thermoplastic compounds is significantly limited. Several approaches to functionalize polyarylene ether sulfone polymers for better adhesion to fibrous or particulate fillers are known in the art.

While EP 855 430 A1 describes the use of polyarylene ether sulfone polymers with carboxylic acid-groups as compatibilizer between polyarylene ether sulfone polymers and fibrous or particulate fillers, EP 257 6676 A1 teaches the use of polyarylene ether sulfone polymers with hydroxyl-endgroups as additive to improve the performance of fiber or filler reinforced polyarylene ether sulfone polymer compounds.

US 2021/0070996 A1 discloses a polymer composition (C), comprising: at least one polyamide (P1), from 1 to 50 wt. %, based on the total weight of (C), of at least one functionalized polymer (P2), wherein P2 is a poly(aryl ether sulfone) (PAES) having at least one functional group (SO₃⁻), (M^{p+})_{1/p} in which M^{p+} is a metal cation of p valence. The composition (C) can also comprise at least one polymer (P3) selected from the group consisting of poly(aryl ether sulfone) (PAES), a polyarylene sulfide (PAS), and a polyetherimide (PEI).

US 2004/0242807 A1 discloses a molding composition comprising A) from 39 to 99% by weight of at least one polyarylene ether sulfone built up from bifunctional monomer units, B) from 1 to 20% by weight of at least one polyarylene ether sulfone containing, based on the total weight of component B, from 0.1 to 10% by weight of units which derive from 1,1,1-tris(4-hydroxyphenyl)ethane, C) from 0 to 60% by weight of at least one filler, D) from 0 to 40% by weight of at least one impact-modifying rubber, and E) from 0 to 40% by weight of one or more various additives, where the percentages by weight of components A to E give 100% in total.

US 7,098,266 B2 discloses a molding composition comprising A) from 1 to 98.8% by weight of at least one polyarylene ether sulfone, B) from 1 to 98.8% by weight of at least one thermoplastic polyamide, C) from 0.1 to 60% by weight of at least one filler, D) from 0 to 40% by weight of at least one impact-modifying rubber, E) from 0 to 40% by weight of one or more different additives, and F) from 0.1 to 30% by weight of at least one thermotropic polymer, where the total of the percentages by weight of components A to F is 100%, wherein component B has a viscosity number of from 180 to 350 ml/g (measured in a 0.5% strength by weight solution in 96% strength by weight sulfuric acid to DIN 53 727).

Due to the high glass transition temperature of the polyarylene ether sulfone polymers, the temperature requirements during processing of such thermoplastic compounds are quite demanding. But also, during their use, these products need to have excellent thermal stability. There is still a need for thermoplastic molding compositions and molded articles made from these thermoplastic molding compositions with improved mechanical properties and good processing stability.

It is therefore an object of the present invention to provide thermoplastic molding compositions which do not retain the disadvantages of the prior art or only in diminished form. The thermoplastic molding compositions shall be easy to produce. Furthermore, the thermoplastic molding composition should be suitable for the manufacturing of molded articles.

This object is achieved by a thermoplastic molding composition comprising as components
(I) 25 to 94 % by weight of at least one non-sulfonated polyarylene ether sulfone polymer (P),
(II) 1 to 10 % by weight of at least one sulfonated polyarylene ether sulfone polymer (sP) having from 1 to 7.5 mol-% of sulfonated recurring units comprising at least one -SO₃Y group wherein Y is hydrogen or a cation equivalent, based on the total amount of the at least one sulfonated polyarylene ether sulfone polymer (sP) contained in the thermoplastic molding composition,
(III) 4 to 70 % by weight of at least one fibrous and/or particulate filler,
(IV) 1 to 10 % by weight of at least one thermotropic polymer,
wherein the % by weight values in each case are based on the total weight of the thermoplastic molding composition, wherein the HDTA heat deflection temperature according to DIN ISO 75-1 of component (IV) is from 140 to 220°C, wherein component (IV) is at least one thermotropic polymer selected from the group consisting of thermotropic polyesters, thermotropic polyesteramides, thermotropic polyamides and thermotropic polyesterimides, and wherein component (IV) is at least one thermotropic polymer composed of at least 50 moll% of the repeating units of the structures (ia) and/or (ib) 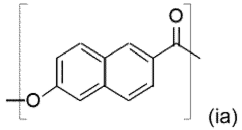 and/or 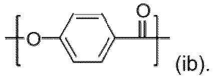 based on the total amount of the at least one thermotropic polymer.

It has surprisingly been found that thermoplastic molding compositions according to the invention show high temperature resistance and good processability. Moreover, molded articles produced from these thermoplastic molding compositions show excellent thermal stability good mechanical properties, good melt stability, and improved appearance after heat ageing. Furthermore, molded articles produced from these thermoplastic molding compositions show good tensile properties after annealing and after storage in ATF.

The present invention will be described in more detail hereinafter.

### Component (I)

The thermoplastic molding composition comprises as component (I) at least one non-sulfonated polyarylene ether sulfone polymer (P). In the present case the terms "at least one non-sulfonated aromatic dihalogen sulfone polymer (P)" and "component (I)" are used synonymously and therefore have the same meaning.

The thermoplastic molding composition comprises 25 to 94 % by weight component (I) based on the total weight of the thermoplastic molding composition.

The term "at least one non-sulfonated polyarylene ether sulfone polymer (P)" in the present case, is understood to mean exactly one non-sulfonated polyarylene ether sulfone polymer (P) and also mixtures of two or more non-sulfonated polyarylene ether sulfone polymers (P).

"Non-sulfonated" within the context of the present invention means that the non-sulfonated polyarylene ether sulfone polymer (P) does not comprise groups resulting from the sulfonation of the aromatic dihalogen sulfone contained in the non-sulfonated polyarylene ether sulfone polymer (P). Processes for the sulfonation are known to the skilled person. In particular, "non-sulfonated" within the context of the present invention means that the non-sulfonated polyarylene ether sulfone polymer (P) does not comprise any -SO₂X group wherein X is selected from the group consisting of OH and O⁻ combined with one cation equivalent.

"One cation equivalent" within the context of the present invention means one cation of a single positive charge or one charge equivalent of a cation with two or more positive charges, for example Li⁺, Na⁺, K⁺, Mg²⁺, Ca²⁺ or NH₄⁺.

In a preferred embodiment the thermoplastic molding composition comprise 30 to 88.5 % by weight, more preferably 35 to 83.5 % by weight and most preferably 40 to 80 % by weight of component (I), in in each case are based on the total weight of the thermoplastic molding composition.

Processes for the preparation of component (I) are known to the skilled person. In a preferred embodiment component (I) is prepared by a process comprising the step of converting a reaction mixture (R_{GI}) comprising as components (IA1) at least one non-sulfonated aromatic dihalogen sulfone, (IB1) at least one aromatic dihydroxy compound, (IC) at least one carbonate compound and (ID) at least one aprotic polar solvent.

Another object of the present invention is, therefore, a thermoplastic molding composition wherein component (I) is prepared by a process comprising the step of converting a reaction mixture (R_{GI}) comprising as components
(IA1) at least one non-sulfonated aromatic dihalogen sulfone
(IB1) at least one aromatic dihydroxy compound,
(IC) at least one carbonate compound,
(ID) at least one aprotic polar solvent.

### Reaction mixture (R_{GI})

Preferably the preparation of the non-sulfonated polyarylene ether sulfone polymers (P) comprises as step I) converting a reaction mixture (R_{GI}) comprising the components (IA1), (IB1), (IC) and (ID) described above.

The components (IA1) and (IB1) enter into a polycondensation reaction.

Component (ID) acts as a solvent and component (IC) acts as a base to deprotonate component (IB1) during the condensation reaction.

Reaction mixture (R_{GI}) is understood to mean the mixture that is used in the process for preparing the non-sulfonated polyarylene ether sulfone polymer (P). In the present case all details given with respect to the reaction mixture (R_{GI}) thus, relate to the mixture that is present prior to the polycondensation. The polycondensation takes place during the process in which the reaction mixture (R_{GI}) reacts by polycondensation of components (IA1) and (IB1) to give the target product, the non-sulfonated polyarylene ether sulfone polymer (P). The mixture obtained after the polycondensation which comprises the non-sulfonated polyarylene ether sulfone polymer (P) target product is also referred to as product mixture (P_{GI}). The product mixture (P_{GI}) usually furthermore comprises the at least one aprotic polar solvent (component (ID)) and a halide compound. The halide compound is formed during the conversion of the reaction mixture (R_{GI}). During the conversion first, component (IC) reacts with component (IB1) to deprotonate component (IB1). Deprotonated component (IB1) then reacts with component (IA1) wherein the halide compound is formed. This process is known to the person skilled in the art.

The components of the reaction mixture (R_{GI}) are preferably reacted concurrently. The individual components may be mixed in an upstream step and subsequently be reacted. It is also possible to feed the individual components into a reactor in which these are mixed and then reacted.

In the process according to the invention, the individual components of the reaction mixture (R_{GI}) are preferably reacted concurrently preferably in step I). This reaction is preferably conducted in one stage. This means, that the deprotonation of component (IB1) and also the condensation reaction between components (IA1) and (IB1) take place in a single reaction stage without isolation of the intermediate products, for example the deprotonated species of component (IB1).

The process according to step I) is preferably carried out according to the so called "carbonate method". The process is preferably not carried out according to the so called "hydroxide method". This means, that the process according to the invention is not carried out in two stages with isolation of phenolate anions. Therefore, in a preferred embodiment, the reaction mixture (R_{GI}) is essentially free from sodium hydroxide and potassium hydroxide. More preferably, the reaction mixture (R_{GI}) is essentially free from alkali metal hydroxides and alkali earth metal hydroxides.

The term "essentially free" in the present case is understood to mean that the reaction mixture (R_{GI}) comprises less than 100 ppm, preferably less than 50 ppm of sodium hydroxide and potassium hydroxide, preferably of alkali metal hydroxides and alkali earth metal hydroxides, based on the total weight of the reaction mixture (R_{GI}).

It is furthermore preferred that the reaction mixture (R_{GI}) does not comprise toluene or monochlorobenzene. It is particularly preferred that the reaction mixture (R_{GI}) does not comprise any substance which forms an azeotrope with water.

The ratio of component (IA1) and component (IB1) derives in principal from the stoichiometry of the polycondensation reaction which proceeds with theoretical elimination of hydrogen chloride and is established by the person skilled in the art in a known manner.

Preferably, the ratio of halogen end groups derived from component (IA1) to phenolic end groups derived from component (IB1) is adjusted by controlled establishment of an excess of component (IB1) in relation to component (IA1) as starting compound.

More preferably, the molar ratio of component (IB1) to component (IA1) is from 0.96 to 1.08, especially from 0.98 to 1.06, most preferably from 0.985 to 1.05.

Preferably, the conversion in the polycondensation reaction is at least 0.9.

Process step I) for the preparation of the non-sulfonated polyarylene ether sulfone polymer (P) is typically carried out under conditions of the so called "carbonate method". This means that the reaction mixture (R_{GI}) is reacted under the conditions of the so called "carbonate method". The polycondensation reaction is generally conducted at temperatures in the range from 80 to 250 °C, preferably in the range from 100 to 220 °C. The upper limit of the temperature is determined by the boiling point of the at least one aprotic polar solvent (component (ID)) at standard pressure (1013.25 mbar). The reaction is generally carried out at standard pressure. The reaction is preferably carried out over a time interval of 0.5 to 12 h, particularly in the range from 1 to 10 h.

The isolation of the obtained non-sulfonated polyarylene ether sulfone polymer (P) obtained in the process in the product mixture (P_{GI}) may be carried out for example by precipitation of the product mixture (P_{GI}) in water or mixtures of water with other solvents. The precipitated non-sulfonated polyarylene ether sulfone polymer (P) can subsequently be extracted with water and then be dried. In one embodiment of the invention, the precipitate can also be taken up in an acidic medium. Suitable acids are for example organic or inorganic acids for example carboxylic acid such as acetic acid, propionic acid, succinic acid or citric acid and mineral acids such as hydrochloric acid, sulfuric acid or phosphoric acid.

The halide compound can be removed from the product mixture (P_{GI}) after step I). The halide compound can be removed by measures commonly known in the art like filtration, centrifugation, decantation etc..

The present invention therefore also provides a process wherein the process furthermore comprises step
II) filtration, centrifugation or decantation of the product mixture (P_{GI}) obtained in step I).

After the polycondensation in a preferred embodiment a conversion with an aliphatic organic halogen compound is conducted. Thereby the reactive hydroxyl groups are end-caped and the polymer is further stabilized. The conversion with an aliphatic organic halogen compound can be conducted before or after the filtration.

Preferred aliphatic organic halogen compounds are alkyl halides, in particular alkyl chlorides, having linear or branched alkyl groups having from 1 to 10 carbon atoms, in particular primary alkyl chlorides, particularly preferably methyl halide, in particular methyl chloride.

The reaction with the aliphatic organic halogen compound is preferably carried out at a temperature of from 90° to 160°C., in particular from 100° C. to 150° C. The time can vary widely and is usually at least 5 minutes, in particular at least 15 minutes. The reaction time is preferably from 15 minutes to 8 hours, in particular from 30 minutes to 4 hours.

Various methods can be used for the addition of the aliphatic organic halogen compound. The amounts added of the aliphatic organic halogen compound can moreover be stoichiometric or represent an excess, where the excess can by way of example be up to a 5-fold excess. In one preferred embodiment, the aliphatic organic halogen compound is added continuously, in particular via continuous introduction in the form of a stream of gas.

### Component (IA1)

The reaction mixture (R_{GI}) comprises at least one non-sulfonated aromatic dihalogen sulfone as component (IA1).

The term "at least one non-sulfonated aromatic dihalogen sulfone" in the present case, is understood to mean exactly one non-sulfonated aromatic dihalogen sulfone and also mixtures of two or more non-sulfonated aromatic dihalogen sulfones. In the present case the terms "at least one non-sulfonated aromatic dihalogen sulfone" and "component (IA1)" are used synonymously and therefore have the same meaning.

The at least one non-sulfonated aromatic dihalogen sulfone (component (IA1)) is preferably at least one non-sulfonated aromatic dihalodiphenyl sulfone.

"Non-sulfonated" within the context of the present invention means that the aromatic dihalogen sulfone does not comprise groups resulting from the sulfonation of the aromatic dihalogen sulfone. Processes for the sulfonation are known to the skilled person. In particular, "non-sulfonated" within the context of the present invention means that the aromatic dihalogen sulfone does not comprise any -SO₂X group wherein X is selected from the group consisting of OH and O⁻ combined with one cation equivalent.

"One cation equivalent" within the context of the present invention means one cation of a single positive charge or one charge equivalent of a cation with two or more positive charges, for example Li⁺, Na⁺, K⁺, Mg²⁺, Ca²⁺ or NH₄⁺.

Component (IA1) is preferably used as a monomer. This means that the reaction mixture (R_{GI}) comprises component (IA1) preferably as a monomer and not as a prepolymer.

Preferred non-sulfonated aromatic dihalogen sulfones are non-sulfonated 4,4'-dihalodiphenyl sulfones. Particular preference is given to 4,4'-dichlorodiphenyl sulfone, 4,4'-difluorodiphenyl sulfone and/or 4,4'-dibromodiphenyl sulfone. 4,4'-dichlorodiphenyl sulfone and 4,4'-difluorodiphenyl sulfone are particularly preferred, while 4,4'-dichlorodiphenyl sulfone is most preferred.

Another object of the present invention is therefore also a process wherein component (IA1) is selected from the group consisting of 4,4'-dichlorodiphenyl sulfone and 4,4'-difluorodiphenyl sulfone.

Preferably component (IA1) comprises at least 50 % by weight of at least one non-sulfonated aromatic dihalogen sulfone selected from the group consisting of 4,4'-dichlorodiphenyl sulfone and 4,4'-difluorodiphenyl sulfone, based on the total weight of component (IA1) in the reaction mixture (R_{GI}).

In a particularly preferred embodiment, component (IA1) comprises at least 80 % by weight, preferably at least 90 % by weight, more preferably at least 98 % by weight, of at least one non-sulfonated aromatic dihalogen sulfone selected from the group consisting of 4,4'-dichlorodiphenyl sulfone and 4,4'-difluorodiphenyl sulfone, based on the total weight of component (IA1) in the reaction mixture (R_{GI}).

In a further particularly preferred embodiment, component (IA1) consists essentially of at least one non-sulfonated aromatic dihalogen sulfone selected from the group consisting of 4,4'-dichlorodiphenyl sulfone and 4,4'-difluorodiphenyl sulfone.

In a further preferred embodiment, component (IA1) consists of 4,4'-dichlorodiphenyl sulfone.

### Component (IB1)

The reaction mixture (R_{GI}) preferably comprises at least one aromatic dihydroxy compound as component (IB1). The term "at least one aromatic dihydroxy compound", in the present case, is understood to mean exactly one aromatic dihydroxy compound and also mixtures of two or more aromatic dihydroxy compounds. Preferably, component (IB1) is precisely one aromatic dihydroxy compound or a mixture of precisely two dihydroxy compound. Most preferred component (IB1) is precisely one aromatic dihydroxy compound.

In the present case the terms "at least one aromatic dihydroxy compound" and "component (IB1)" are used synonymously and therefore have the same meaning.

The aromatic dihydroxy compounds used are typically compounds having two phenolic hydroxyl groups. Since the reaction mixture (R_{GI}) comprises at least one carbonate compound, the hydroxyl groups of component (IB1) in the reaction mixture (R_{GI}) may be present partially in deprotonated form.

Component (IB1) is preferably used as a monomer. This means that the reaction mixture (R_{GI}) comprises component (IB1) preferably as monomer and not as prepolymer.

Suitable aromatic dihydroxyl compounds are, for example, selected from the group consisting of 4,4'-dihydroxybiphenyl, 4,4'-dihydroxydiphenylsulfone and bisphenol A (IUPAC name: 4,4'-(propane-2,2-diyl)diphenol)).

In one embodiment of the present invention, the reaction mixture (R_{GI}) does not comprise any bisphenol A. In another embodiment the reaction mixture (R_{GI}) does not comprise any hydroquinone.

Component (IB1) preferably comprises at least 50% by weight, more preferably at least 80% by weight, particularly preferably at least 90% by weight and especially at least 98% by weight of an aromatic dihydroxyl compound selected from the group consisting of 4,4'-dihydroxybiphenyl, 4,4'-dihydroxydiphenylsulfone and bisphenol A, based on the total weight of component (IB1) in the reaction mixture (R_{GI}). 4,4'-Dihydroxybiphenyl and 4,4'-dihydroxydiphenylsulfone are preferred as aromatic dihydroxyl components, wherein 4,4'-dihydroxybiphenyl is particularly preferred as aromatic dihydroxyl component.

In a particularly preferred embodiment, component (IB1) consists of 4,4'-dihydroxydiphenyl sulfone, 4,4'-dihydroxydiphenylsulfone or a mixture of these compounds.

### Component (IC)

The reaction mixture (R_{GI}) comprises at least one carbonate compound as component (IC). The term "at least one carbonate compound" in the present case, is understood to mean exactly one carbonate compound and also mixtures of two or more carbonate compounds. The at least one carbonate compound is preferably at least one metal carbonate. The metal carbonate is preferably anhydrous. In the present case the terms "at least one carbonate compound" and "component (IC)" are used synonymously and therefore have the same meaning.

Preference is given to alkali metal carbonates and/or alkaline earth metal carbonates as metal carbonates. At least one metal carbonate selected from the group consisting of sodium carbonate, potassium carbonate and calcium carbonate is particularly preferred as metal carbonate. Potassium carbonate is most preferred.

For example, component (IC) comprises at least 50 % by weight, more preferred at least 70 % by weight and most preferred at least 90 % by weight of potassium carbonate based on the total weight of the at least one carbonate component in the reaction mixture (R_{GI}).

In a preferred embodiment component (IC) consists of potassium carbonate. Potassium carbonate having a volume weighted average particle size of less than 200 µm is particularly preferred as potassium carbonate. The volume weighted average particle size of the potassium carbonate is determined in a suspension of potassium carbonate in N-methylpyrrolidone using a particle size analyser. The amount of metal carbonate used when expressed as alkali metal (M) per equivalent hydroxyl group (OH) ranges preferably from 1.00 to 2.00.

### Component (ID)

The reaction mixture (R_{GI}) comprises preferably at least one aprotic polar solvent as component (ID). "At least one aprotic polar solvent", according to the invention, is understood to mean exactly one aprotic polar solvent and also mixtures of two or more aprotic polar solvents. In the present case the terms "at least one aprotic polar solvent" and "component (ID)" are used synonymously and therefore have the same meaning.

Suitable aprotic polar solvents are, for example, selected from the group consisting of anisole, dimethylformamide, dimethylsulfoxide, sulfolane, N-methylpyrrolidone, N-ethylpyrrolidone and N-dimethylacetamide.

Preferably, component (ID) is selected from the group consisting of N-methylpyrrolidone, N-dimethylacetamide, dimethylsulfoxide and dimethylformamide. N-methylpyrrolidone is particularly preferred as component (ID).

It is preferred that component (ID) comprises at least 50 % by weight of at least one solvent selected from the group consisting of N-methylpyrrolidone, N-dimethylacetamide, dimethylsulfoxide and dimethylformamide based on the total weight of component (ID) in the reaction mixture (R_{GI}). N-methylpyrrolidone is particularly preferred as component (ID).

In a further preferred embodiment, component (ID) consists of N-methylpyrrolidone.

In a preferred embodiment, component (ID) consists of N-methylpyrrolidone. N-methylpyrrolidone is also referred to as NMP or N-methyl-2-pyrrolidone.

The non-sulfonated polyarylene ether sulfone polymers (P), used as component (I), preferably have low polydispersities (Q) and high glass transition temperatures (T_{g}). The non-sulfonated polyarylene ether sulfone polymers (P), moreover, have very low amounts of impurities, for example azeotroping agents such as toluene or chlorobenzene.

The non-sulfonated polyarylene ether sulfone polymers (P) generally has a polydispersity (Q) of ≤ 4.5, preferably ≤ 4.0.

The polydispersity (Q) is defined as the quotient of the weight average molecular weight (M_{w}) and the number average molecular weight (Mₙ). In a preferred embodiment, the polydispersity (Q) of the non-sulfonated polyarylene ether sulfone polymers (P) is in the range of 2.0 to ≤ 4.5, preferably in the range of 2.0 to ≤ 4.0.

The weight average molecular weight (M_{w}) and the number average molecular weight (Mₙ) are measured by means of gel permeation chromatography.

The polydispersity (Q) and the average molecular weights of the non-sulfonated polyarylene ether sulfone polymers (P) were measured by means of gel permeation chromatography (GPC) in dimethylacetamide (DMAc). The mobile phase (eluent) used was DMAc comprising 0.5% by weight of lithium bromide. The concentration of the polyarylether polymer (P) (P solution) was 4 mg per millilitre of solution. After filtration (pore size 0.2 µm), 100 µl of this solution were injected into the GPC system. Four different columns (heated to 80°C) were used for separation (GRAM precolumn, GRAM 30A, GRAM 1000A, GRAM 1000A; separation material: polyester copolymers ex. PSS). The GPC system was operated at a flow rate of 1 ml per minute. A DRI-Agilent 1100 was used as the detection system. PMMA standards ex. PSS having a molecular weight Mₙ in the range of 800 to 1 820 000 g/mol were used for the calibration.

Suitable non-sulfonated polyarylene ether sulfone polymers (P) generally have weight average molecular weights (M_{w}) of 10 000 to 150 000 g/mol, preferably in the range of 15 000 to 120 000 g/mol, particularly preferably in the range of 20 000 to 90 000 g/mol. The weight average molecular weights (M_{w}) are measured by means of gel permeation chromatography (GPC). The measurement is carried out as described above.

Suitable non-sulfonated polyarylene ether sulfone polymers (P) generally have glass transition temperatures in of 185 to 250 °C, preferably in the range of 185 to 245 °C, particularly preferably in the range of 185 to 240 °C

Suitable non-sulfonated polyarylene ether sulfone polymers (P) generally have a high glass transition temperature (T_{g}). The measurement of the glass transition temperature (T_{g}) was carried out in a DSC 2000 (TA Instruments) at a heating rate of 20 K/min. For the measurement, approximately 5 mg of the substance were sealed in an aluminum crucible. In the first heating run, the samples are heated to 280°C, then rapidly cooled to -100°C and then, in the second heating run, heated to 280°C at 20 K/min. The respective T_{g} value is determined from the second heating run.

In a further preferred embodiment the thermoplastic molding composition contains at least one non-sulfonated polyaryl ether sulfone polymer (P) having less the 0.05 % by weight of OH-end groups, based on the number average weight (Mn) of the non-sulfonated polyaryl ether sulfone polymer (P). The amount of OH-end groups is determined by potentiometric titration using DMF as solvent.

Especially preferred as component (I) are non-sulfonated polyarylene ether polymers (P) selected from the group consisting of polyethersulfone (PESU), polyphenylenesulfone (PPSU) and polysulfone (PSU), wherein polyethersulfone (PESU) and polyphenylenesulfone (PPSU) are particularly preferred.

In one embodiment the thermoplastic molding composition does not comprise polysulfone (PSU).

The abbreviations PPSU, PESU and PSU in the present case are in accordance with DIN EN ISO 1043-1 :2001.

### Component (II)

The thermoplastic molding composition comprises as component (II) at least one sulfonated polyarylene ether sulfone polymer (sP). In the present case the terms "at least one sulfonated aromatic dihalogen sulfone polymer (sP)" and "component (II)" are used synonymously and therefore have the same meaning.

The thermoplastic molding composition comprises 1 to 10 % by weight component (II) based on the total weight of the thermoplastic molding composition.

The term "at least one sulfonated polyarylene ether sulfone polymer (sP)" in the present case, is understood to mean exactly one sulfonated polyarylene ether sulfone polymer (sP) and also mixtures of two or more sulfonated polyarylene ether sulfone polymers (sP).

The at least one sulfonated polyarylene ether sulfone polymer (sP) comprises from 1 to 7.5 mol-% of sulfonated recurring units comprising at least one -SO₃Y group wherein Y is hydrogen or a cation equivalent, based on the total amount of the at least one sulfonated polyarylene ether sulfone polymer (sP) contained in the thermoplastic molding composition.

Total amount of the at least one sulfonated polyarylene ether sulfone polymer (sP) within the context of the present invention preferably means the total amount of recurring units and end-groups contained in the at least one sulfonated polyarylene ether sulfone polymer (sP).

"Sulfonated" within the context of the present invention means that the sulfonated polyarylene ether sulfone polymer (sP) contains groups resulting from the sulfonation of an aromatic dihalogen sulfone. The sulfonation of aromatic dihalogen sulfones is known to the skilled person. In particular, "sulfonated" means that the sulfonated polyarylene ether sulfone polymer (sP) contains sulfonated recurring units comprising at least one -SO₃Y group wherein Y is hydrogen or a cation equivalent, hereinafter also referred to as sulfonated recurring units.

"Cation equivalent" within the context of the present invention means a cation of a single positive charge or one charge equivalent of a cation with two or more positive charges, for example Li⁺, Na⁺, K⁺, Mg²⁺, Ca²⁺, NH₄⁺, preferably Na⁺, K⁺.

"At least one -SO₃Y group" within the context of the present invention means precisely one -SO₃Y group and also two or more -SO₃Y groups. Preferred are precisely two - SO₃Y groups. This means that the sulfonated recurring units contained in the least one the sulfonated polyarylene ether sulfone polymer (sP) preferably comprise two -SO₃Y groups.

In a preferred embodiment the thermoplastic molding composition comprising 1,5 to 9 % by weight, more preferably 2 to 8.5 % by weight and most preferably 2.5 to 8 % by weight of component (II), in in each case are based on the total weight of the thermoplastic molding composition.

Processes for the preparation of component (II) are known to the skilled person. In a preferred embodiment component (II) is prepared by a process comprising the step of converting a reaction mixture (R_{GII}) comprising as components (IIA1) at least one non-sulfonated aromatic dihalogen sulfone, (IIA2) at least one sulfonated aromatic dihalogen sulfone (IIB1) at least one aromatic dihydroxy compound, (IIC) at least one carbonate compound and (IID) at least one aprotic polar solvent.

Another object of the present invention is, therefore, a thermoplastic molding composition wherein component (II) is prepared by a process comprising the step of converting a reaction mixture (R_{GII}) comprising as components
(IIA1) from 90 to 99 mol-% of at least one non-sulfonated aromatic dihalogen sulfone, based on the sum of the mol-% of components (IIA1) and (IIA2) contained in the reaction mixture (R_{GII}),
(IIA2) from 1 to 10 mol-% of at least one sulfonated aromatic dihalogen sulfone comprising at least one -SO₃Y group wherein Y is hydrogen or a cation equivalent, based on the sum of the mol-% of components (IIA1) and (IIA2) contained in the reaction mixture (R_{GII}),
(IIB1) at least one aromatic dihydroxy compound,
(IIC) at least one carbonate compound,
(IID) at least one aprotic polar solvent.

### Reaction mixture (R_{GII})

Preferably, the preparation of the sulfonated polyarylene ether sulfone polymers (sP) comprises as step I) converting a reaction mixture (R_{GII}) comprising the components (IIA1), (IIA2), (IIB1), (IIC) and (IID) described above.

The components (IIA1), (IIA2) and (IIB1) enter into a polycondensation reaction.

Component (IID) acts as a solvent and component (IIC) acts as a base to deprotonate component (IIB1) during the condensation reaction.

Reaction mixture (R_{GII}) is understood to mean the mixture that is used in the process for preparing the sulfonated polyarylene ether sulfone polymer (sP). In the present case all details given with respect to the reaction mixture (R_{GII}) thus, relate to the mixture that is present prior to the polycondensation. The polycondensation takes place during the process in which the reaction mixture (R_{GII}) reacts by polycondensation of components (IIA1), (IIA2) and (IIB1) to give the target product, the sulfonated polyarylene ether sulfone polymer (sP). The mixture obtained after the polycondensation which comprises the sulfonated polyarylene ether sulfone polymer (sP) target product is also referred to as product mixture (P_{GII}). The product mixture (P_{GII}) usually furthermore comprises the at least one aprotic polar solvent (component (IID)) and a halide compound. The halide compound is formed during the conversion of the reaction mixture (R_{GII}). During the conversion first, component (IIC) reacts with component (IIB1) to deprotonate component (IIB1). Deprotonated component (IIB1) then reacts with components (IIA1) and (IIA2) wherein the halide compound is formed. This process is known to the person skilled in the art.

The components of the reaction mixture (R_{GII}) are preferably reacted concurrently. The individual components may be mixed in an upstream step and subsequently be reacted. It is also possible to feed the individual components into a reactor in which these are mixed and then reacted.

In the process according to the invention, the individual components of the reaction mixture (R_{GII}) are preferably reacted concurrently preferably in step I). This reaction is preferably conducted in one stage. This means, that the deprotonation of component (IIB1) and also the condensation reaction between components (IIA1), (IIA2) and (IIB1) take place in a single reaction stage without isolation of the intermediate products, for example the deprotonated species of component (IIB1).

The process according to step I) is preferably carried out according to the so called "carbonate method". The process is preferably not carried out according to the so called "hydroxide method". This means, that the process according to the invention is not carried out in two stages with isolation of phenolate anions. Therefore, in a preferred embodiment, the reaction mixture (R_{GII}) is essentially free from sodium hydroxide and potassium hydroxide. More preferably, the reaction mixture (R_{GII}) is essentially free from alkali metal hydroxides and alkali earth metal hydroxides.

The term "essentially free" in the present case is understood to mean that the reaction mixture (R_{GI}) comprises less than 100 ppm, preferably less than 50 ppm of sodium hydroxide and potassium hydroxide, preferably of alkali metal hydroxides and alkali earth metal hydroxides, based on the total weight of the reaction mixture (R_{GII}).

It is furthermore preferred that the reaction mixture (R_{GII}) does not comprise toluene or monochlorobenzene. It is particularly preferred that the reaction mixture (R_{GII}) does not comprise any substance which forms an azeotrope with water.

The ratio of component (IIA1), component (IIA2) and component (IIB1) derives in principal from the stoichiometry of the polycondensation reaction which proceeds with theoretical elimination of hydrogen chloride and is established by the person skilled in the art in a known manner.

Preferably, the ratio of halogen end groups derived from components (IIA1) and (IIA2) to phenolic end groups derived from component (IIB1) is adjusted by controlled establishment of an excess of component (IIB1) in relation to components (IIA1) and (IIA2) as starting compound.

More preferably, the molar ratio of component (IIB1) to components (IIA1) and (IIA2) is from 0.96 to 1.08, especially from 0.98 to 1.06, most preferably from 0.985 to 1.05.

For example, the reaction mixture (RGII) comprises from 0.9 to 0.99 mol of component (IIA1) and from 0.01 to 0.1 mol of component (IIA2) per 1 mol of component (IIB1).

Preferably, the conversion in the polycondensation reaction is at least 0.9.

Process step I) for the preparation of the non-sulfonated polyarylene ether sulfone polymer (P) is typically carried out under conditions of the so called "carbonate method". This means that the reaction mixture (R_{GII}) is reacted under the conditions of the so called "carbonate method". The polycondensation reaction is generally conducted at temperatures in the range from 80 to 250 °C, preferably in the range from 100 to 220 °C. The upper limit of the temperature is determined by the boiling point of the at least one aprotic polar solvent (component (IID)) at standard pressure (1013.25 mbar). The reaction is generally carried out at standard pressure. The reaction is preferably carried out over a time interval of 0.5 to 12 h, particularly in the range from 1 to 10 h.

The isolation of the obtained sulfonated polyarylene ether sulfone polymer (sP) obtained in the process in the product mixture (P_{GII}) may be carried out for example by precipitation of the product mixture (P_{GII}) in water or mixtures of water with other solvents. The precipitated sulfonated polyarylene ether sulfone polymer (sP) can subsequently be extracted with water and then be dried. In one embodiment of the invention, the precipitate can also be taken up in an acidic medium. Suitable acids are for example organic or inorganic acids for example carboxylic acid such as acetic acid, propionic acid, succinic acid or citric acid and mineral acids such as hydrochloric acid, sulfuric acid or phosphoric acid.

The halide compound can be removed from the product mixture (P_{GII}) after step I). The halide compound can be removed by measures commonly known in the art like filtration, centrifugation, decantation etc..

The present invention therefore also provides a process wherein the process furthermore comprises step
II) filtration, centrifugation or decantation of the product mixture (P_{GII}) obtained in step I).

### Component (IIA1)

The reaction mixture (R_{GII}) comprises at least one non-sulfonated aromatic dihalogen sulfone as component (IIA1).

The term "at least one non-sulfonated aromatic dihalogen sulfone" in the present case, is understood to mean exactly one non-sulfonated aromatic dihalogen sulfone and also mixtures of two or more non-sulfonated aromatic dihalogen sulfones. In the present case the terms "at least one non-sulfonated aromatic dihalogen sulfone" and "component (IIA1)" are used synonymously and therefore have the same meaning.

The reaction mixture (R_{GII}) comprises preferably from 90 to 99 mol-% of at least one non-sulfonated aromatic dihalogen sulfone as component (IIA1), based on the sum of the mol-% of components (IIA1) and (IIA2) contained in the reaction mixture (R_{GII}). Preferably, the reaction mixture (R_{GII}) comprises from 93 to 98.5 mol-% and most preferably from 93.5 to 98 mol-% of at least one non-sulfonated aromatic dihalogen sulfone as component (IIA1), based on the sum of the mol-% of components (IIA1) and (IIA2) contained in the reaction mixture (R_{GII}).

In view of component (IIA1) the above description and preferences in view of component (IA1) apply accordingly. Components (IIA1) and (IA1) may be equal or different. In one embodiment, components (IIA1) are (IA1) equal. In another embodiment components (IIA1) are (IA1) different.

### Component (IIA2)

In the present case the terms "at least one non-sulfonated aromatic dihalogen sulfone" and "component (IIA1)" are used synonymously and therefore have the same meaning.

The reaction mixture (R_{GII}) preferably comprises preferably from 1 to 10 mol-% of at least one sulfonated aromatic dihalogen sulfone as component (IIA2), based on the sum of the mol-% of components (IIA1) and (IIA2) contained in the reaction mixture (R_{GII}). Preferably, the reaction mixture (R_{GII}) comprises from 1.5 to 7 mol-% and most preferably from 2 to 6.5 mol-% of at least one sulfonated aromatic dihalogen sulfone as component (IIA2), based on the sum of the mol-% of components (IIA1) and (IIA2) contained in the reaction mixture (R_{GII}).

The term "at least one sulfonated aromatic dihalogen sulfone" in the present case, is understood to mean exactly one sulfonated aromatic dihalogen sulfone and also mixtures of two or more sulfonated aromatic dihalogen sulfones.

"Sulfonated" within the context of the present invention means that the sulfonated aromatic dihalogen sulfone comprises at least one group resulting from the sulfonation of the aromatic dihalogen sulfone. The sulfonation of aromatic dihalogen sulfones is known to the skilled person. In particular, "sulfonated" means that the aromatic dihalogen sulfone comprises at least one -SO₃Y group wherein Y is hydrogen or a cation equivalent.

"Cation equivalent" within the context of the present invention means a cation of a single positive charge or one charge equivalent of a cation with two or more positive charges, for example Li⁺, Na⁺, K⁺, Mg²⁺, Ca²⁺, NH₄⁺, preferably Na⁺, K⁺.

"At least one -SO₃Y group" within the context of the present invention means precisely one -SO₃Y group and also two or more -SO₃Y groups. Preferred are precisely two - SO₃Y groups. This means that the at least one sulfonated aromatic dihalogen sulfone is preferably at least one disulfonated aromatic halogen sulfone.

The sum of the mol-% of components (IIA1) and (IIA2) contained in the reaction mixture (R_{GII}) usually is 100 mol-%.

It is preferred that component (IIA2) comprises at least 50 % by weight of at least one sulfonated aromatic dihalogen sulfone selected from the group consisting of
4,4'-dichlorodiphenyl sulfone-3,3'-disulfonic acid,
4,4'-difluorodiphenyl sulfone-3,3'-disulfonic acid,
4,4'-dichloro-diphenylsulfone-3,3'-disulfonic acid disodium salt,
4,4'-dichlorodiphenylsulfone-3,3'-disulfonic acid dipotassium salt,
4,4'-difluorodiphenylsulfone-3,3'-disulfonic acid disodium salt, and
4,4'-difluorodiphenylsulfone-3,3'-disulfonic acid dipotassium salt,
based on the total weight of component (IIA2).

In a particularly preferred embodiment component (IIA2) comprises at least 80 % by weight, preferably at least 90 % by weight, more preferably at least 98 % by weight of at least one sulfonated aromatic dihalogen sulfone selected from the group consisting of 4,4'-dichlorodiphenyl sulfone-3,3'-disulfonic acid, 4,4'-difluorodiphenyl sulfone-3,3'-disulfonic acid, 4,4'-dichloro-diphenylsulfone-3,3'-disulfonic acid disodium salt, 4,4'-dichlorodiphenylsulfone-3,3'-disulfonic acid dipotassium salt, 4,4'-difluorodiphenylsulfone-3,3'-disulfonic acid disodium salt and 4,4'-difluorodiphenylsulfone-3,3'-disulfonic acid dipotassium salt, in each case based on the total weight of component (IIA2) in the reaction mixture (R_{GII}).

It is even more preferred that component (IIA2) comprises at least 50 % by weight of at least one sulfonated aromatic dihalogen sulfone selected from the group consisting of
4,4'-dichloro-diphenylsulfone-3,3'-disulfonic acid disodium salt,
4,4'-dichlorodiphenylsulfone-3,3'-disulfonic acid dipotassium salt,
4,4'-difluorodiphenylsulfone-3,3'-disulfonic acid disodium salt, and
4,4'-difluorodiphenylsulfone-3,3'-disulfonic acid dipotassium salt,
based on the total weight of component (IIA2).

In a even more particularly preferred embodiment component (IIA2) comprises at least 80 % by weight, preferably at least 90 % by weight, more preferably at least 98 % by weight of at least one sulfonated aromatic dihalogen sulfone selected from the group consisting of, 4,4'-dichloro-diphenylsulfone-3,3'-disulfonic acid disodium salt, 4,4'-dichlorodiphenylsulfone-3,3'-disulfonic acid dipotassium salt, 4,4'-difluorodiphenylsulfone-3,3'-disulfonic acid disodium salt and 4,4'-difluorodiphenylsulfone-3,3'-disulfonic acid dipotassium salt, in each case based on the total weight of component (IIA2) in the reaction mixture (R_{GII}).

The terms "sulfonic acid" and "-SO₃Y group" in the context of component (IIA2) are used synonymously and have the same meaning. The term "sulfonic acid" in the 4,4'-dichlorodiphenyl sulfone-3,3'-disulfonic acid and 4,4'-difluorodiphenyl sulfone-3,3'-disulfonic acid therefore means "-SO₃Y group" wherein Y is hydrogen or a cation equivalent.

4,4'-dichlorodiphenylsulfone-3,3'-disulfonic acid and 4,4'-dichlorodiphenylsulfone-3,3'-disulfonic acid disodium salt are particularly preferred as component (IIA2), wherein 4,4'-dichlorodiphenylsulfone-3,3'-disulfonic acid disodium salt is more preferred.

### Component (IIC)

The reaction mixture (R_{GII}) comprises at least one carbonate compound as component (IIC). The term "at least one carbonate compound" in the present case, is understood to mean exactly one carbonate compound and also mixtures of two or more carbonate compounds. The at least one carbonate compound is preferably at least one metal carbonate. The metal carbonate is preferably anhydrous. In the present case the terms "at least one carbonate compound" and "component (IIC)" are used synonymously and therefore have the same meaning.

In view of component (IIC) the above description and preferences in view of component (IC) apply accordingly. Components (IIC) and (IC) may be equal or different. In one embodiment, components (IIC) are (IC) equal. In another embodiment components (IIC) are (IC) different. The amount of metal carbonate used when expressed as alkali metal (M) per equivalent hydroxyl group (OH) ranges preferably from 1.00 to 2.00 is preferred.

### Component (IID)

The reaction mixture (R_{GII}) comprises preferably at least one aprotic polar solvent as component (IID). "At least one aprotic polar solvent", according to the invention, is understood to mean exactly one aprotic polar solvent and also mixtures of two or more aprotic polar solvents. In the present case the terms "at least one aprotic polar solvent" and "component (IID)" are used synonymously and therefore have the same meaning.

In view of component (IID) the above description and preferences in view of component (ID) apply accordingly. Components (IID) and (ID) may be equal or different. In one embodiment, components (IID) are (ID) equal. In another embodiment components (IID) are (ID)different.

The sulfonated polyarylene ether sulfone polymers (sP), used as component (II), preferably have low polydispersities (Q) and high glass transition temperatures (T_{g}). The sulfonated polyarylene ether sulfone polymers (sP), moreover, have very low amounts of impurities, for example azeotroping agents such as toluene or chlorobenzene.

The sulfonated polyarylene ether sulfone polymers (sP) generally has a polydispersity (Q) of ≤ 4.5, preferably ≤ 4.0.

The polydispersity (Q) is defined as the quotient of the weight average molecular weight (M_{w}) and the number average molecular weight (Mₙ). In a preferred embodiment, the polydispersity (Q) of the sulfonated polyarylene ether sulfone polymers (sP) is in the range of 2.0 to ≤ 4.5, preferably in the range of 2.0 to ≤ 4.0.

The weight average molecular weight (M_{w}) and the number average molecular weight (Mₙ) are measured by means of gel permeation chromatography, as described above for component (I).

Suitable sulfonated polyarylene ether sulfone polymers (sP) generally have weight average molecular weights (M_{w}) of 10 000 to 150 000 g/mol, preferably in the range of 15 000 to 120 000 g/mol, particularly preferably in the range of 20 000 to 90 000 g/mol. The weight average molecular weights (M_{w}) are measured by means of gel permeation chromatography (GPC). The measurement is carried out as described above.

Suitable sulfonated polyarylene ether sulfone polymers (sP) generally have glass transition temperatures in of 185 to 255 °C, preferably in the range of 185 to 250 °C, particularly preferably in the range of 185 to 245 °C.

Especially preferred as component (I) are sulfonated polyarylene ether polymers (P) selected from the group consisting of sulfonated polyethersulfone (sPESU), sulfonated polyphenylenesulfone (sPPSU) and sulfonated polysulfone (sPSU), wherein sulfonated polyethersulfone (sPESU) and sulfonated polyphenylenesulfone (sPPSU) are particularly preferred.

In one embodiment the thermoplastic molding composition does not comprise sulfonated polysulfone (sPSU).

The abbreviations PPSU, PESU and PSU in the present case are in accordance with DIN EN ISO 1043-1 :2001.

### Component (III)

The thermoplastic molding composition comprises as component (III) at least one fibrous and/or particulate filler. In the present case the terms "at least one fibrous and/or particulate filler" and "component (III)" are used synonymously and therefore have the same meaning.

The thermoplastic molding composition comprises 4 to 70 % by weight of component (III) based on the total weight of the thermoplastic molding composition.

The term "at least one fibrous and/or particulate filler" in the present case, is understood to mean exactly one at least one fibrous and/or particulate filler and also mixtures of two or more at least one fibrous and/or particulate fillers.

In a preferred embodiment the thermoplastic molding composition comprising 8.5 to 60 % by weight, more preferably 12.5 to 50 % by weight and most preferably 15 to 45 % by weight of component (III), in in each case are based on the total weight of the thermoplastic molding composition.

In a preferred embodiment the thermoplastic molding composition comprises as component (III) at least one fibrous filler selected from the group consisting of carbon fibers, potassium titanate whiskers, aramid fibers, and glass fibers and/or at least one particulate filler selected from the group consisting of amorphous silica, magnesium carbonate, chalk, powdered quartz, mica, clay, muscovite, biotite, suzoite, tin maletite, talc, chlorite, phlogopite, feldspar, wollastonite and kaolin.

### Component (IV)

The thermoplastic molding composition comprises as component (IV) at least one thermotropic polymer. In the present case the terms "at least one thermotropic polymer" and "component (IV)" are used synonymously and therefore have the same meaning.

The thermoplastic molding composition comprises 1 to 10 % by weight component (IV) based on the total weight of the thermoplastic molding composition.

The term "at least one thermotropic polymer" in the present case, is understood to mean exactly one thermotropic polymer and also mixtures of two or more thermotropic polymers.

In the invention, the thermoplastic molding composition comprises as component (IV) at least one or more, but preferably one, thermotropic polymer(s).

In a preferred embodiment the thermoplastic molding composition comprises 1.5 to 9 % by weight, more preferably 2 to 8 % by weight and most preferably 2.5 to 7.5 % by weight of component (IV), in in each case based on the total weight of the thermoplastic molding composition.

The expression "thermotropic polymer" in the present case means a polymer which has within a defined temperature range liquid-crystalline properties. Particularly suitable thermotropic polymers are those, which are liquid-crystalline within the temperature range within which the thermoplastic molding compositions of the invention are processed.

The transition temperature Tₖ of the liquid-crystalline phase in the melt of the thermotropic polymers suitable as component (IV) is generally 350°C or lower. Transition temperatures Tₖ of preferred liquid-crystalline polymers (thermotropic polymers) usable as component (IV) are 340°C or lower. Preferred thermotropic polymers are those having a transition temperature Tₖ in the range of from 200 to 350°C, in In particular preferred in the range of 270 to 340.

The transition temperature Tₖ can be determined by means of differential scanning calorimetry (DSC) measurement using a heating rate of 20 K/min, where the Tₖ values stated are determined in the 2^{nd} heating procedure.

Thermotropic polymers usable as component (IV) are at least one selected from the group consisting of thermotropic polyesters, thermotropic polyesteramides, thermotropic polyamides and thermotropic polyesterimides.

The term "thermotropic polyesters" in the present case means thermotropic polyesters as well as thermotropic copolyesters. Thermotropic polyesters and/or thermotropic copolyesters are especially preferred as component (IV), wherein fully aromatic thermotropic polyesters and/or fully aromatic thermotropic copolyesters are particularly preferred as component (IV).

Suitable thermotropic polyester by way of example derive from one or more of the following monomeric units: p-hydroxybenzoic acid, m-hydroxybenzoic acid, terephthalic acid, isophthalic acid, hydroxyquinone, phenylhydroquinone, alkyl-substituted hydroquinones, in particular 2-methylhydroquinone, 2-ethylhydroquinone, 2-n-propylhydroquinone, 2-i-propylhydroquinone, 2-tert-butylhydroquinone, hallogen-substituted 2-n-hydroquinones, in particular 2-chlorohydroquinone.

Other examples for suitable monomers for the production of the thermotropic polyester are 4,4'-dihydroxydiphenyl ether, 1,3-dihydroxybenzene, 4,4'-biphenol, 2,6,2',6'-tetramethylbiphenol, 2,6-dihydroxynaphthalene, 2,7-dihydroxynaphthalene, 2,6-naphthalenedicarboxylic acid, 6-hydroxy-2-naphthalenecarboxylic acid, 4,4'-bis(p-hydroxyphenoxy)diphenyl sulfone, 2,6-dihydroxyanthraquinone, 4,4'-diphenyl ether dicarboxylic acid, and 4,4'-dihydroxybenzophenone. Particularly suitable compounds are p-acetoxybenzoic acid and 2,6-acetoxynaphthalenecarboxylic acid, and also hydroxy compounds activated via esterification.

Thermotropic polyesters which derive from abovementioned dicarboxylic acids and from aliphatic or cycloaliphatic polyols, preferably diols, are equally suitable. Diols that can be used are compounds of formula (ii):

HO-R⁸·OH formula (ii).

R⁸ here represents C₂C₁₈-alkylene units, preferably C₂-C₁₀-alkylene units, in substituted or unsubstituted form. Examples of suitable units are ethylene, propylene, butylene, pentylene, and hexylene. It is particularly preferable that in each case one of the two hydroxy groups is bonded to the first or last carbon atom. R⁸ can moreover be an unsubstituted or substituted cycloaliphatic moiety having from 3 to 13 carbon atoms, preferably from 5 to 8 carbon atoms, for example cyclopropylene, cyclopentylene, or cyclohexylene. Preferred diols are ethylene glycols, 1,4-butanediol, 2,2-dimethyl-1,3-propanediol, 1,6-hexanediol, 1,10-decanediol, and 1,4-cyclohexanedimethanol.

As component (IV) a thermotropic polyester is especially preferred that derives from 4-hydroxybenzoic acid and/or 6-hydroxy-2-naphthoic acid and optionally further monomers.

The thermoplastic molding compositions comprise as component (IV) at least one thermotropic polyester having repeating units of the structure (ia) and/or (ib) 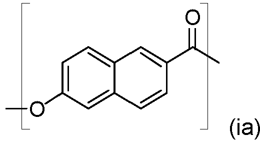 and/or 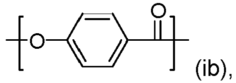 wherein thermotropic polyester having repeating units of the structure (ia) and (ib) are especially preferred.

Preferably the at least one thermotropic polyester is composed of at least 50 mol%, more preferably of at least 75 mol%, even more preferably of at least 85 mol% and most preferably of at least 95 mol% of the repeating units of the structure (ia) and (ib), based on the total amount of the at least on thermotropic polyester.

The thermotropic polyesters generally comprise from 10 to 90 mol% of the units (ia) and from 10 to 90 mol% of the units (ib) and optionally from 0 to 30 mol% of one or more further repeating units.

The thermoplastic molding composition particularly comprises as component (IV) at least one thermotropic polymer composed of from 10 to 90 mol% of the units (ia) and of from 10 to 90 mol% of the units (ib), wherein the total of the molar proportions is 100 mol%, based on the thermotropic polymer.

Thermotropic polyesteramides can also be used as component (IV), where these comprise repeating units of the structure (iii) alone and/or in combination with repeating units of the formula (ia) and/or (ib).

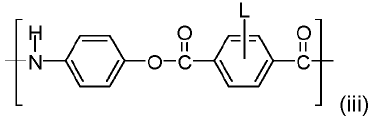

The moiety L can be hydrogen, C₁-C₁₀-alkyl, e.g. methyl, ethyl, n-propyl, isopropyl, or n-butyl, preferably methyl, C₁-C₁₀-alkoxy, e.g. methoxy, ethoxy, n-propoxy, isopropoxy, or n-butoxy, preferably methoxy, or halogen, preferably chlorine.

The molar masses Mw (weight average) of the at least one thermotropic polymers used in the invention as component (IV) are in general from 1500 to 150 000 g/mol, preferably from 2500 to 50 000 g/mol. Mw can be determined by means of light scattering at 25°C in a solution of phenol and ortho-dichlorobenzene in a ratio of 1:1.

The HDT A heat deflection temperature of the thermotropic polymer (method A, outer fiber stress σ_{f} 1.80 N/mm², constant heating rate 120 K/h) measured in accordance with DIN ISO 75-1 is from 140 to 220°C.

Liquid-crystalline polymers of this type are known per se or can be produced by known methods. Suitable production processes are mentioned by way of example in US-A-4 161 470. Other production processes can be found by way of example in EP-A-139 303, EP-A-226 839, EP-A-226 978, EP-A-225 539, EP-A-226 847, and EP-A-257 558.

### Component (V)

In one embodiment, the thermoplastic molding composition can comprise as component (V) at least one additive. The further component (V) is typically present in the range of 0 to 40 % by weight, preferably in the range of 0 to 30 % by weight and especially preferred in the range of 0 to 20 % by weight, in each case based on the total weight of the thermoplastic molding composition.

Component (V) is preferably at least one additive selected from the group consisting of processing aids, pigments, stabilizers, flame retardants, impact modifiers or mixtures of those. Common materials that can be utilized are for example heat stabilizers, UV-stabilizers, Lubricants, pigments and dyes. Component V can be present in amounts of 0 to 40 wt.%, preferably from 0 to 25 wt.% in each case based on the total weight of the thermoplastic molding composition.

Pigments are usually used in quantities from 0 to 6 wt.%, preferably from 0 to 5 wt.%. Pigments for the coloration of thermoplastic materials are generally known and can be found in R. Gächter and H. Müller, Taschenbuch der Kunststoffadditive, Carl Hanser Verlag. As preferred pigments Zincoxide or Titaniumoxide can be used. Furthermore, carbon black can be applied as pigment (see G. Benzing, "Pigmente für Anstrichmittel", Expert Verlag (1988) p.78). To create other colors Chromium-based pigments or organic pigments can be utilized.

As heat stabilizers the well known additives like sterically hindered phenols or secondary amines can be utilized. For UV-protection benztriazoles, benzophenons or other known UV-stabilizers are applicable.

As lubricant or demolding agents stearylalcohol, stearic acid, stearic acid esters of amides or esters of pentaerythrite can be used. Preferably, stearic acid can be used.

The person skilled in the art knows methods for the production of the thermoplastic molding composition. For the production of the thermoplastic molding composition, generally the components (I), (II) and (III), (IV) and optionally (V) are mixed.

For the production of the thermoplastic molding composition, the components can be, for example, dry-blended or compounded in a compounding unit in the molten state. Preferably, the components for the production of the thermoplastic molding composition are compounded in an extruder, preferably a twin screw extruder. The melt temperature in the barrels is preferably kept below 400 °C, more preferably below 380°C.

The present invention is further elucidated by the following working examples without limiting it thereto.

### Examples

### Components used

### Component I

### Component 11

As component I1 a polyethersulfone (PESU) having a viscosity number of 49.0 ml/g was used. The used product had 0.19 wt.-% Cl-endgroups (Elemental analysis) and 0.23 wt.-% OCH₃-Endgroups (¹H-NMR). The amount of OH-endgroups was below the detection limit (< 0.02 wt.%).

### Component 12

As component I2 a polyphenylenesulfone (PPSU) having a viscosity number of 59.0 ml/g was used. The amount of OH-endgroups was below the detection limit (< 0.02 wt. %).

### Component II

### Component II1

The preparation of the sulfonated PESU (sPESU) was done according to the following procedure:
In a 4 **I** HWS-vessel with stirrer, Dean-Stark-trap, nitrogen-inlet and temperature control, 562.83 g (1.960 mol) 4,4'-dichlorodiphenylsulfone (DCDPS), 24.56 g (0.05 mol) disodium 3,3'-disulfonate-4,4'-dichlorodiphenylsulfone (sDCDPS), 500.34 g (2,00 mol) 4,4'-dihydroxydiphenylsulfone (DHDPS), and 304.062 g (2.20 mol) potassiumcarbonate (particle size 39,3 µm) are suspended under nitrogen atmosphere in 1050 ml NMP. Under stirring the mixture is heated up to 190°C. 30 I/h nitrogen is purged through the mixture and the mixture is kept at 190°C for 9 h. After this time 1950 ml NMP are added to cool down the mixture. Under nitrogen the mixture is allowed to cool down below 60°C. After filtration the polymer solution is precipitated in water. The precipitated product is extracted with hot water (20 h at 85°C) and dried at 120°C for 24 h under reduced pressure.

The viscosity number (V.N.) of the product was 62.0 ml/g, the quantity of sDCDPS-units incorporated was 2 mol% (¹H-NMR).

### Component 112

In a 4 **I** HWS-vessel with stirrer, Dean-Stark-trap, nitrogen-inlet and temperature control, 545.60 g (1.90 mol) 4,4'dDichlorodiphenylsulfone (DCDPS), 49.12 g (0.10 mol) disodium 3,3'-disulfonate-4,4'-dichlorodiphenylsulfone (sDCDPS), 500.34 g (2,00 mol) 4,4'-dihydroxydiphenylsulfone (DHDPS), and 304.062 g (2.20 mol) potassiumcarbonate (particle size 39,3 µm) are suspended under nitrogen atmosphere in 1050 ml NMP. Under stirring the mixture is heated up to 190°C. 30 I/h nitrogen is purged through the mixture and the mixture is kept at 190°C for 9.5 h. After this time 1950 ml NMP are added to cool down the mixture. Under nitrogen the mixture is allowed to cool down below 60°C. After filtration the polymer solution is precipitated in water. The precipitated product is extracted with hot water (20 h at 85°C) and dried at 120°C for 24 h under reduced pressure.

The V.N. of the product was 64.1 ml/g, the quantity of sDCDPS-units incorporated was 3.9 mol% (¹H-NMR).

### Component 113

The preparation of the sulfonated PPSU (sPPSU) was done according to the following procedure:
In a 4 I HWS-vessel with stirrer, Dean-Stark-trap, nitrogen-inlet and temperature control, 516.88 g (1.80 mol) 4,4'-dichlorodiphenylsulfone (DCDPS), 98.25 g (0.20 mol) disodium 3,3'-disulfonate-4,4'-dichlorodiphenylsulfone (sDCDPS), 372.42 g (2,00 mol) 4,4'-dihydroxybiphenyl (DHBP), and 304.06 g (2.20 mol) potassiumcarbonate (particle size 37.5 µm) are suspended under nitrogen atmosphere in 1250 ml NMP. Under stirring the mixture is heated up to 190°C. 30 I/h nitrogen is purged through the mixture and the mixture is kept at 190°C for 6 h. After this time 1750 ml NMP are added to cool down the mixture. Under nitrogen 6 the mixture is allowed to cool down below 60°C. After filtration the polymer solution is precipitated in water. The precipitated product is extracted with hot water (20 h at 85°C) and dried at 120°C for 24 h under reduced pressure.

The V.N. of the product was 63.4 ml/g, the amount of unit based on sDCDPS was 6.5 mol% (determined by ¹H-NMR).

### Component 114

The preparation of the sulfonated PPSU (sPPSU) was done according to the following procedure:
In a 4 I HWS-vessel with stirrer, Dean-Stark-trap, nitrogen-inlet and temperature control, 574.34 g (2.00 mol) 4,4'-dichlorodiphenylsulfone (DCDPS), 24.56 g (0.05 mol) disodium 3,3'-disulfonate-4,4'-dichlorodiphenylsulfone (sDCDPS), 372.42 g (2,00 mol) 4,4'-dihydroxybiphenyl (DHBP), and 293.0 g (2.12 mol) potassiumcarbonate (particle size 37.5 µm) are suspended under nitrogen atmosphere in 1250 ml NMP. Under stirring the mixture is heated up to 190°C. 30 I/h nitrogen is purged through the mixture and the mixture is kept at 190°C for 6 h. After this time 1750 ml NMP are added to cool down the mixture. Under nitrogen the mixture is allowed to cool down below 60°C. After filtration the polymer solution is precipitated in water. The precipitated product is extracted with hot water (20 h at 85°C) and dried at 120°C for 24 h under reduced pressure.

The V.N. of the product was 75.4 ml/g, the amount of unit based on sDCDPS was 1.9 mol% (determined by ¹H-NMR).

### Component IIV1

The preparation of the sulfonated PPSU (sPPSU) was done according to the following procedure:
In a 4 I HWS-vessel with stirrer, Dean-Stark-trap, nitrogen-inlet and temperature control, 488.19 g (1.70 mol) 4,4'-dichlorodiphenylsulfone (DCDPS), 148.56 g (0.30 mol) disodium 3,3'-disulfonate-4,4'-dichlorodiphenylsulfone (sDCDPS), 372.42 g (2,00 mol) 4,4'-dihydroxybiphenyl (DHBP), and 317.88 g (2.30 mol) potassiumcarbonate (particle size 37.5 µm) are suspended under nitrogen atmosphere in 1250 ml NMP. Under stirring the mixture is heated up to 190°C. 30 I/h nitrogen is purged through the mixture and the mixture is kept at 190°C for 7.5 h. After this time 1750 ml NMP are added to cool down the mixture. Under nitrogen the mixture is allowed to cool down below 60°C. After filtration the polymer solution 7 is precipitated in water. The precipitated product is extracted with hot water (20 h at 85°C) and dried at 120°C for 24 h under reduced pressure.

The V.N. of the product was 61.1 ml/g, the amount of unit based on sDCDPS was 11.2 mol% (determined by ¹H-NMR).

### Component IIV2

The preparation of the OH-terminated PESU (PESU-OH) was done according to the following procedure:
In a 4 I HWS-vessel with stirrer, Dean-Stark-trap, nitrogen-inlet and temperature control, 278,27 g (0,969 mol) 4,4'-dichlorodiphenylsulfone (DCDPS), 250,17 g (1,00 mol) 4,4'-dihydroxydiphenylsulfone (DHDPS), and 152,03 g (1,10 mol) potassiumcarbonate (particle size 39,3 µm) are suspended under nitrogen atmosphere in 1000 ml NMP. Under stirring the mixture is heated up to 190°C. 30 I/h nitrogen is purged through the mixture and the mixture is kept at 190°C for 6 h. After this time 500 ml NMP are added to cool down the mixture. Under nitrogen the mixture is allowed to cool down below 60°C. After filtration the polymer solution is precipitated in water. The precipitated product is extracted with hot water (20 h at 85°C) and dried at 120°C for 24 h under reduced pressure.

The V.N. of the product was 48.3 ml/g, the amount of OH-endgroups was 0.22 wt.% (determined by potentiometric titration).

### Component IIV3

The preparation of the carboxyl-functionalized PPSU, according to EP 855430 (PPSU-co DPA) was done according to the following procedure:
In a 4 I HWS-vessel with stirrer, Dean-Stark-trap, nitrogen-inlet and temperature control, 585.81 g (2.04 mol) 4,4'-dichlorodiphenylsulfone (DCDPS), 42.95 g (0.15 mol) diphenoxy valeric acid (DPA), 344.49 g (1,70 mol) 4,4'-dihydroxybiphenyl (DHDP), and 310.97 g (2.25 mol) potassiumcarbonate (particle size 39,3 µm) are suspended under nitrogen atmosphere in 1538 ml NMP. Under stirring the mixture is heated up to 190°C. 30 I/h nitrogen is purged through the mixture and the mixture is kept at 190°C for 6 h. After this time 1462 ml NMP are added to cool down the mixture. Under nitrogen the mixture is allowed to cool down below 60°C. After filtration the polymer solution is precipitated in water. The precipitated product is extracted with hot water (20 h at 85°C) and dried at 120°C for 24 h under reduced pressure.

The V.N. of the product was 48.3 ml/g, the quantity of DPA-based units was 6.2 mol% (determined by ¹H-NMR).

### Component III

Glass fibers, chopped strands (length 4,5 mm) with a diameter of 10 µm and a PU-based sizing.

### Component IV

As component (IV) a thermotropic polyester having repeating units of the formula ia and ib (as defined above), characterized by a modulus of elasticity of 7.8 GPa and by a HDT A heat deflection temperature of 187°C measured in accordance with DIN ISO 75-1 is used.

The viscosity numbers (V.N.) are preferably determined at a concentration of 1 g polymer in 100 ml NMP at 25°C using an Ubbelohde-viscosimeter.

The amount of OH end groups is determined by potentiometric titration using DMF as solvent.

### Production of the thermoplastic molding composition I testing

Compounding was done using a twin screw extruder (ZSK 18), the barrel temperatures were set to keep the melt temperature below 400°C. Molding of the test samples was done at a melt temperature of 350°C and a mold temperature of 140°C. Tensile testing was done according to ISO 527 (E-Modulus, strength, tensile elongation.

Impact strength was tested according to ISO 179 1eU. The melt flow of the products was tested according to ISO 1133 at melt temperature of 360°C and a load of 10 kg.

Tensile bars were stored at 200°C for 500 h and then a tensile test was performed.

Tensile bars were stored in ATF (Shell Donax, pour point -48°C9 at 150°C for 500 h and then a tensile test was performed.

The content of units derived form the sulfonated monomer (sDCDPS) and DPA were determined by ¹H-NMR.

**Table 1:**

| **Example** | **V1** | **V2** | **V3** | **V4** | **V5** | **6** | **7** |
|---|---|---|---|---|---|---|---|
| I1 (PESU) | 70 | 65 | 65 | 65 | 62.5 | 62.5 | 62.5 |
| II1 (sPESU) | - | 5 | - | - | - | 5 | - |
| II2 (sPESU) | - | - | 5 | - | - | - | 5 |
| IIV2 (PESU-OH) | - | - | - | 5 | - | - | - |
| III (GF) | 30 | 30 | 30 | 30 | 30 | 30 | 30 |
| IV | - | - | - | - | 2.5 | 2.5 | 2.5 |
| ISO 179 1eU [kJ/m²] | 56 | 69 | 73 | 60 | 68 | 71 | 74 |
| E-Modulus [GPa] | 9.5 | 9.4 | 9.5 | 9.5 | 9.9 | 9.8 | 9.9 |
| Strength at break [MPa] | 148 | 153 | 154 | 151 | 159 | 162 | 165 |
| Elong. at break [%] | 2.7 | 3.2 | 3.1 | 2.9 | 2.7 | 3.3 | 3.4 |
| MVR [ml/10min] | 59 | 52 | 51 | 54 | 60 | 67 | 66 |
| Strength at break ann. [MPa] | 131 | 139 | 143 | 122 | 134 | 145 | 145 |
| Elong. at break ann. [%] | 2.1 | 2.7 | 2.9 | 2.2 | 2.4 | 3.0 | 3.0 |
| Strength at break [MPa] After storage in ATF | 121 | 127 | 128 | 112 | 118 | 141 | 143 |
| Elong. at break [%] After storage in ATF | 1.8 | 2.1 | 2.1 | 1.4 | 1.9 | 2.4 | 2.5 |

**Table 2:**

| **Example** | **V8** | **V9** | **V10** | **V11** | **V12** | **13** | **14** |
|---|---|---|---|---|---|---|---|
| I2 (PPSU) | 70 | 65 | 65 | 65 | 65 | 62.5 | 62.5 |
| II3 (sPPSU) | - | 5 | - | - | - | 5 | - |
| II4 (sPPSU) | - | - | 5 | - | - | - | 5 |
| IIV1 (sPPSU) | - | - | - | 5 | - | - | - |
| IIV3 (PPSU-DPA) | - | - | - | | 5 | - | - |
| III (GF) | 30 | 30 | 30 | 30 | 30 | 30 | 30 |
| IV | - | - | - | - | - | 2.5 | 2.5 |
| ISO 179 1eU [kJ/m²] | 39 | 68 | 71 | 56 | 65 | 68 | 74 |
| E-Modulus [GPa] | 8.9 | 9.0 | 9.0 | 8.7 | 8.9 | 9.6 | 9.9 |
| Strength at break [MPa] | 133 | 139 | 143 | 117 | 144 | 149 | 155 |
| Elong. at break [%] | 2.3 | 3.0 | 3.2 | 1.8 | 3.1 | 3.0 | 3.2 |
| MVR [ml/10min] | 28 | 24 | 26 | 2.9 | 23 | 33 | 35 |
| Strength at break ann. [MPa] | 127 | 134 | 140 | 106 | 119 | 142 | 145 |
| Elong. at break ann. [%] | 1.9 | 2.8 | 3.0 | 1.5 | 2.1 | 3.0 | 3.1 |
| Strength at break [MPa] after storage in ATF | 106 | 117 | 120 | 100 | 99 | 134 | 137 |
| Elong. at break [%] after storage in ATF | 1.4 | 1.8 | 1.9 | 1.3 | 1.3 | 2.5 | 2.6 |

The thermoplastic molding compositions according to the invention show excellent mechanical performance and surprisingly the best retention of tensile properties after storage in ATF and after extensive annealing.

## Claims

1. Thermoplastic molding composition comprising as components
(I) 25 to 94 % by weight of at least one non-sulfonated polyarylene ether sulfone polymer (P),
(II) 1 to 10 % by weight of at least one sulfonated polyarylene ether sulfone polymer (sP) having from 1 to 7.5 mol-% of sulfonated recurring units comprising at least one -SO₃Y group wherein Y is hydrogen or a cation equivalent, based on the total amount of the at least one sulfonated polyarylene ether sulfone polymer (sP) contained in the thermoplastic molding composition,
(III) 4 to 70 % by weight of at least one fibrous and/or particulate filler,
(IV) 1 to 10 % by weight of at least one thermotropic polymer,
wherein the % by weight values in each case are based on the total weight of the thermoplastic molding composition, wherein the HDTA heat deflection temperature according to DIN ISO 75-1 of component (IV) is from 140 to 220°C, wherein component (IV) is at least one thermotropic polymer selected from the group consisting of thermotropic polyesters, thermotropic polyesteramides, thermotropic polyamides and thermotropic polyesterimides, and wherein component (IV) is at least one thermotropic polymer composed of at least 50 mol% of the repeating units of the structures (ia) and/or (ib) 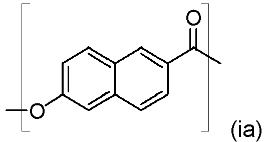 and/or 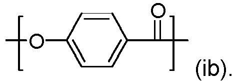
based on the total amount of the at least one thermotropic polymer.

2. The thermoplastic molding composition according to claim 1, wherein component (IV) is at least one thermotropic polymer composed of from 10 to 90 mol% of the units (ia) and of from 10 to 90 mol% of the units (ib), wherein the total of the molar proportions is 100 mol%, based on the thermotropic polymer.

3. The thermoplastic molding composition according claim 1 or 2, wherein component (I) is prepared by a process comprising the step of converting a reaction mixture (R_{GI}) comprising as components
(IA1) at least one non-sulfonated aromatic dihalogen sulfone
(IB1) at least one aromatic dihydroxy compound,
(IC) at least one carbonate compound,
(ID) at least one aprotic polar solvent.

4. The thermoplastic molding composition according to any of claims 1 to 3, wherein component (II) is prepared by a process comprising the step of converting a reaction mixture (R_{GII}) comprising as components
(IIA1) from 90 to 99 mol-% of at least one non-sulfonated aromatic dihalogen sulfone, based on the sum of the mol-% of components (IIA1) and (IIA2) contained in the reaction mixture (R_{GII}),
(IIA2) from 1 to 10 mol-% of at least one sulfonated aromatic dihalogen sulfone comprising at least one -SO₃Y group wherein Y is hydrogen or a cation equivalent, based on the sum of the mol-% of components (IIA1) and (IIA2) contained in the reaction mixture (R_{GII}),
(IIB1) at least one aromatic dihydroxy compound,
(IIC) at least one carbonate compound,
(IID) at least one aprotic polar solvent.

5. The thermoplastic molding composition according to any of claims 3 to 4, wherein component (IA1) comprises at least 50 % by weight of one ore more non-sulfonated aromatic dihalogen sulfone/s selected from the group consisting of 4,4'-dichlorodiphenylsulfone and 4,4'-difluorodiphenylsulfone based on the total weight of component (IA1) contained in the reaction mixture (R_{GI}).

6. The thermoplastic molding composition according to any of claims 4 to 5, wherein component (IIA1) comprises at least 50 % by weight of one ore more non-sulfonated aromatic dihalogen sulfone/s selected from the group consisting of 4,4'-dichlorodiphenylsulfone and 4,4'-difluorodiphenylsulfone based on the total weight of component (IIA1) contained in the reaction mixture (R_{GII}).

7. The thermoplastic molding composition according to any of claims 4 to 6, wherein component (IIA2) comprises at least 50 % by weight of one ore more sulfonated aromatic dihalogen sulfone/s selected from the group consisting of disulfonated 4,4'-dichlorodiphenylsulfone and disulfonated 4,4'-difluorodiphenylsulfone based on the total weight of component (IIA2) contained in the reaction mixture (R_{GII}).

8. The thermoplastic molding composition according to any of claims 3 to 7, wherein component (IB1) comprises at least 50 % by weight of one ore more aromatic dihydroxy compound/s selected from the group consisting of 4,4'-dihydroxydiphenylsulfone, 4,4'-dihydroxybiphenyl and bisphenol-A, based on the total weight of component (IB1) contained in the reaction mixture (R_{GI}).

9. The thermoplastic molding composition according to any of claims 4 to 8, wherein component (IIB1) comprises at least 50 % by weight of one ore more aromatic dihydroxy compound/s selected from the group consisting of 4,4'-dihydroxydiphenylsulfone, 4,4'-dihydroxybiphenyl and bisphenol-A, based on the total weight of component (IIB1) contained in the reaction mixture (R_{GII}).

10. The thermoplastic molding composition according to any of claims 1 to 9, wherein component (III) is at least one fibrous filler selected from the group consisting of carbon fibers, potassium titanate whiskers, aramid fibers, and glass fibers and/or at least one least one particulate filler selected from the group consisting of amorphous silica, magnesium carbonate, chalk, powdered quartz, mica, clay, muscovite, biotite, suzoite, tin maletite, talc, chlorite, phlogopite, feldspar, wollastonite and kaolin.

11. The thermoplastic molding composition according to any of claims 1 to 10, wherein in component (II) Y is a cation equivalent.

12. A process for the manufacturing a molded article using the thermoplastic molding composition according to any of claims 1 to 11.

13. Molded article obtained by the process according to claim 12.

## Patentansprüche

1. Thermoplastische Formmasse, umfassend als Komponenten
(I) 25 bis 94 Gew.-% mindestens eines nicht sulfonierten Polyarylenethersulfon-Polymers (P),
(II) 1 bis 10 Gew.-% mindestens eines sulfonierten Polyarylenethersulfon-Polymers (sP) mit 1 bis 7,5 Mol-% sulfonierten Wiederholungseinheiten, die mindestens eine -SO₃Y-Gruppe umfassen, wobei Y für Wasserstoff oder ein Kationenäquivalent steht, bezogen auf die Gesamtmenge des mindestens einen sulfonierten Polyarylenethersulfon-Polymers (sP), das in der thermoplastischen Formmasse enthalten ist,
(III) 4 bis 70 Gew.-% mindestens eines faser- und/oder teilchenförmigen Füllstoffs,
(IV) 1 bis 10 Gew.-% mindestens eines thermotropen Polymers,
wobei sich die Gew.-%-Werte jeweils auf das Gesamtgewicht der thermoplastischen Formmasse beziehen, wobei die HDTA-Wärmeformbeständigkeit gemäß DIN ISO 75-1 der Komponente (IV) 140 bis 220 °C beträgt, wobei es sich bei Komponente (IV) um mindestens ein thermotropes Polymer handelt, das aus der Gruppe bestehend aus thermotropen Polyestern, thermotropen Polyesteramiden, thermotropen Polyamiden und thermotropen Polyesterimiden ausgewählt ist, und wobei es sich bei Komponente (IV) um mindestens ein thermotropes Polymer handelt, das aus mindestens 50 Mol-% der Wiederholungseinheiten der Strukturen (ia) und/oder (ib) 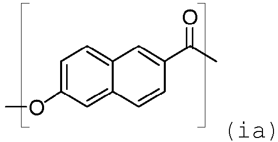 und/oder 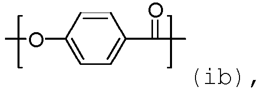
bezogen auf die Gesamtmenge des mindestens einen thermotropen Polymers, besteht.

2. Thermoplastische Formmasse nach Anspruch 1, wobei es sich bei Komponente (IV) um mindestens ein thermotropes Polymer handelt, das aus 10 bis 90 Mol-% der Einheiten (ia) und 10 bis 90 Mol-% der Einheiten (ib) besteht, wobei die Summe der molaren Anteile 100 Mol-%, bezogen auf das thermotrope Polymer, beträgt.

3. Thermoplastische Formmasse nach Anspruch 1 oder 2, wobei die Komponente (I) nach einem Verfahren hergestellt wird, das den Schritt des Umsetzens einer Reaktionsmischung (R_{GI}) umfasst, die als Komponenten Folgendes umfasst:
(IA1) mindestens ein nicht sulfoniertes aromatisches Dihalogensulfon,
(IE1) mindestens eine aromatische Dihydroxyverbindung,
(IC) mindestens eine Carbonatverbindung,
(ID) mindestens ein aprotisches polares Lösungsmittel.

4. Thermoplastische Formmasse nach einem der Ansprüche 1 bis 3, wobei die Komponente (II) nach einem Verfahren hergestellt wird, das den Schritt des Umsetzens einer Reaktionsmischung (R_{GII}) umfasst, die als Komponenten Folgendes umfasst:
(IIA1) 90 bis 99 Mol-% mindestens eines nicht sulfonierten aromatischen Dihalogensulfons, bezogen auf die Summe der Mol-% der in der Reaktionsmischung (R_{GII}) enthaltenen Komponenten (IIA1) und (IIA2),
(IIA2) 1 bis 10 Mol-% mindestens eines sulfonierten aromatischen Dihalogensulfons, das mindestens eine -SO₃Y-Gruppe umfasst, wobei Y für Wasserstoff oder ein Kationenäquivalent steht, bezogen auf die Summe der Mol-% der in der Reaktionsmischung (R_{GII}) enthaltenen Komponenten (IIA1) und (IIA2),
(IIB1) mindestens eine aromatische Dihydroxyverbindung,
(IIC) mindestens eine Carbonatverbindung,
(IID) mindestens ein aprotisches polares Lösungsmittel.

5. Thermoplastische Formmasse nach einem der Ansprüche 3 bis 4, wobei Komponente (IA1) mindestens 50 Gew.-% eines oder mehrerer nicht sulfonierter aromatischer Dihalogensulfone, die aus der Gruppe bestehend aus 4,4'-Dichlordiphenylsulfon und 4,4'-Difluordiphenylsulfon ausgewählt sind, bezogen auf das Gesamtgewicht der in der Reaktionsmischung (R_{GI}) enthaltenen Komponente (IA1), umfasst.

6. Thermoplastische Formmasse nach einem der Ansprüche 4 bis 5, wobei Komponente (IIA1) mindestens 50 Gew.-% eines oder mehrerer nicht sulfonierter aromatischer Dihalogensulfone, die aus der Gruppe bestehend aus 4,4'-Dichlordiphenylsulfon und 4,4'-Difluordiphenylsulfon ausgewählt sind, bezogen auf das Gesamtgewicht der in der Reaktionsmischung (R_{GII}) enthaltenen Komponente (IIA1) , umfasst.

7. Thermoplastische Formmasse nach einem der Ansprüche 4 bis 6, wobei Komponente (IIA2) mindestens 50 Gew.-% eines oder mehrerer sulfonierter aromatischer Dihalogensulfone, die aus der Gruppe bestehend aus disulfoniertem 4,4'-Dichlordiphenylsulfon und disulfoniertem 4,4'-Difluordiphenylsulfon ausgewählt sind, bezogen auf das Gesamtgewicht der in der Reaktionsmischung (R_{GII}) enthaltenen Komponente (IIA2), umfasst.

8. Thermoplastische Formmasse nach einem der Ansprüche 3 bis 7, wobei Komponente (IB1) mindestens 50 Gew.-% einer oder mehrerer aromatischer Dihydroxyverbindungen, die aus der Gruppe bestehend aus 4,4'-Dihydroxydiphenylsulfon, 4,4'-Dihydroxybiphenyl und Bisphenol-A ausgewählt sind, bezogen auf das Gesamtgewicht der in der Reaktionsmischung (R_{GI}) enthaltenen Komponente (IB1), umfasst.

9. Thermoplastische Formmasse nach einem der Ansprüche 4 bis 8, wobei Komponente (IIB1) mindestens 50 Gew.-% einer oder mehrerer aromatischer Dihydroxyverbindungen, die aus der Gruppe bestehend aus 4,4'-Dihydroxydiphenylsulfon, 4,4'-Dihydroxybiphenyl und Bisphenol-A ausgewählt sind, bezogen auf das Gesamtgewicht der in der Reaktionsmischung (R_{GII}) enthaltenen Komponente (IIB1), umfasst.

10. Thermoplastische Formmasse nach einem der Ansprüche 1 bis 9, wobei es sich bei Komponente (III) um mindestens einen faserförmigen Füllstoff, der aus der Gruppe bestehend aus Kohlenstofffasern, Kaliumtitanatwhiskern, Aramidfasern und Glasfasern ausgewählt ist, und/oder mindestens einen teilchenförmigen Füllstoff, der aus der Gruppe bestehend aus amorphem Siliciumdioxid, Magnesiumcarbonat, Kreide, Quarzmehl, Glimmer, Ton, Muscovit, Biotit, Suzoit, Zinnmaletit, Talkum, Chlorit, Phlogopit, Feldspat, Wollastonit und Kaolin ausgewählt ist, handelt.

11. Thermoplastische Formmasse nach einem der Ansprüche 1 bis 10, wobei in Komponente (II) Y für ein Kationenäquivalent steht.

12. Verfahren zur Herstellung eines Formkörpers unter Verwendung der thermoplastischen Formmasse nach einem der Ansprüche 1 bis 11.

13. Formkörper, erhalten nach dem Verfahren nach Anspruch 12.

## Revendications

1. Composition de moulage thermoplastique comprenant comme composants
(I) 25 à 94 % en poids d'au moins un polymère de polyarylène éther sulfone non sulfonée (P),
(II) 1 à 10 % en poids d'au moins un polymère de polyarylène éther sulfone sulfonée (sP) ayant de 1 à 7,5 % en moles de motifs répétitifs sulfonés comprenant au moins un groupe -SO₃Y dans lequel Y représente hydrogène ou un équivalent cation, par rapport à la quantité totale de l'au moins un polymère de polyarylène éther sulfone sulfonée (sP) contenu dans la composition de moulage thermoplastique,
(III) 4 à 70 % en poids d'au moins une charge fibreuse et/ou particulaire,
(IV) 1 à 10 % en poids d'au moins un polymère thermotrope, les valeurs en % en poids étant en chaque cas basées sur le poids total de la composition de moulage thermoplastique, la température de déviation thermique du HDTA selon la norme DIN ISO 75-1 du composant (IV) étant de 140 à 220 °C, le composant (IV) étant au moins un polymère thermotrope choisi dans le groupe constitué des polyesters thermotropes, des polyesteramides thermotropes, des polyamides thermotropes et des polyesterimides thermotropes, et le composant (IV) étant au moins un polymère thermotrope composé d'au moins 50 % en moles des motifs répétitifs des structures (ia) et/ou (ib) 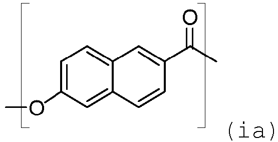 et/ou 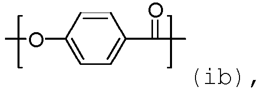
sur la base de la quantité totale de l'au moins un polymère thermotrope.

2. Composition de moulage thermoplastique selon la revendication 1, dans laquelle le composant (IV) est au moins un polymère thermotrope composé de 10 à 90 % en moles des motifs (ia) et de 10 à 90 % en moles des motifs (ib), la somme des proportions molaires étant de 100 % en moles, par rapport au polymère thermotrope.

3. Composition de moulage thermoplastique selon la revendication 1 ou 2, dans laquelle le composant (I) est préparé par un procédé comprenant l'étape de conversion d'un mélange réactionnel (R_{GI}) comprenant comme composants
(IA1) au moins une dihalogénosulfone aromatique non sulfonée,
(IB1) au moins un composé dihydroxy aromatique,
(IC) au moins un composé de carbonate,
(ID) au moins un solvant polaire aprotique.

4. Composition de moulage thermoplastique selon l'une quelconque des revendications 1 à 3, dans laquelle le composant (II) est préparé par un procédé comprenant l'étape de conversion d'un mélange réactionnel (R_{GII}) comprenant comme composants
(IIA1) de 90 à 99 % en moles d'au moins une dihalogénosulfone aromatique non sulfonée, par rapport à la somme des % en moles des composants (IIA1) et (IIA2) contenus dans le mélange réactionnel (R_{GII}),
(IIA2) de 1 à 10 % en moles d'au moins une dihalogénosulfone aromatique sulfonée comprenant au moins un groupe -SO₃Y dans lequel Y représente hydrogène ou un équivalent cation, par rapport à la somme des % en moles des composants (IIA1) et (IIA2) contenus dans le mélange réactionnel (R_{GII}),
(IIB1) au moins un composé dihydroxy aromatique,
(IIC) au moins un composé de carbonate,
(IID) au moins un solvant polaire aprotique.

5. Composition de moulage thermoplastique selon l'une quelconque des revendications 3 à 4, dans laquelle le composant (IA1) comprend au moins 50 % en poids d'une ou plusieurs dihalogénosulfone(s) aromatique(s) non sulfonée(s) choisie(s) dans le groupe constitué de la 4,4'-dichlorodiphénylsulfone et la 4,4'-difluorodiphénylsulfone par rapport au poids total du composant (IA1) contenu dans le mélange réactionnel (R_{GI}).

6. Composition de moulage thermoplastique selon l'une quelconque des revendications 4 à 5, dans laquelle le composant (IIA1) comprend au moins 50 % en poids d'une ou plusieurs dihalogénosulfone(s) aromatique(s) non sulfonée(s) choisie(s) dans le groupe constitué de la 4,4'-dichlorodiphénylsulfone et la 4,4'-difluorodiphénylsulfone par rapport au poids total du composant (IIA1) contenu dans le mélange réactionnel (R_{GII})

7. Composition de moulage thermoplastique selon l'une quelconque des revendications 4 à 6, dans laquelle le composant (IIA2) contient au moins 50 % en poids d'une ou plusieurs dihalogénosulfones aromatiques sulfonées choisies dans le groupe constitué de la 4,4'-dichlorodiphénylsulfone disulfonée et la 4,4'-difluorodiphénylsulfone disulfonée par rapport au poids total du composant (IIA2) contenu dans le mélange réactionnel (R_{GII}).

8. Composition de moulage thermoplastique selon l'une quelconque des revendications 3 à 7, dans laquelle le composant (IB1) contient au moins 50 % en poids d'un ou plusieurs composés dihydroxy aromatiques choisis dans le groupe constitué de la 4,4'-dihydroxydiphénylsulfone, le 4,4'-dihydroxybiphényle et le bisphénol-A, par rapport au poids total du composant (IB1) contenu dans le mélange réactionnel (R_{GI})

9. Composition de moulage thermoplastique selon l'une quelconque des revendications 4 à 8, dans laquelle le composant (IIB1) contient au moins 50 % en poids d'un ou plusieurs composés dihydroxy aromatiques choisis dans le groupe constitué de la 4,4'-dihydroxydiphénylsulfone, le 4,4'-dihydroxybiphényle et le bisphénol-A, par rapport au poids total du composant (IIB1) contenu dans le mélange réactionnel (R_{GII}).

10. Composition de moulage thermoplastique selon l'une quelconque des revendications 1 à 9, dans laquelle le composant (III) est au moins une charge fibreuse choisie dans le groupe constitué des fibres de carbone, des trichites de titanate de potassium, des fibres d'aramide et des fibres de verre et/ou au moins une charge particulaire choisie dans le groupe constitué de la silice amorphe, du carbonate de magnésium, de la craie, du quartz en poudre, du mica, de l'argile, de la muscovite, de la biotite, de la sudoïte, de la malétite d'étain, du talc, de la chlorite, de la phlogopite, du feldspath, de la wollastonite et du kaolin.

11. Composition de moulage thermoplastique selon l'une quelconque des revendications 1 à 10, dans laquelle dans le composant (II) Y est un équivalent cation.

12. Procédé de fabrication d'un article moulé utilisant la composition de moulage thermoplastique selon l'une quelconque des revendications 1 à 11.

13. Article moulé obtenu par le procédé selon la revendication 12.
